# EUROPÄISCHE PATENTSCHRIFT

(11) **EP 2 734 480 B1**
(45) Veröffentlichungstag und Bekanntmachung des Hinweises auf die Patenterteilung: **09.03.2016**
(21) Anmeldenummer: 13750624.2
(22) Anmeldetag: 17.07.2013
(51) Int. Cl.: B23K 26/40, C03B 33/09, C03B 33/02, B23K 26/12, B23K 26/00

(54) **VERFAHREN UND ANORDNUNG ZUM ERZEUGEN VON FASEN AN KANTEN VON FLACHGLAS**
METHOD AND APPARATUS FOR CHAMFERING A GLASSPLATE
MÉTHODE ET APPAREIL POUR CHANFREINER UNE FEUILLE DE VERRE

(30) Priorität: 17.07.2012 AT 2962012
(43) Veröffentlichungstag der Anmeldung: 28.05.2014
(73) Patentinhaber: LISEC Austria GmbH, 3353 Seitenstetten (AT)
(72) Erfinder: MADER, Leopold, 3364 Neuhofen/Ybbs (AT)
(74) Vertreter: Beer & Partner Patentanwälte KG
(86) Internationale Anmeldenummer: PCT/AT2013/000119
(87) Internationale Veröffentlichungsnummer: WO 2014/012125

(56) Entgegenhaltungen:
- EP-A1- 2 286 972
- WO-A1-2008/080182
- WO-A2-2012/006736
- JP-A- 2000 015 467
- US-A1- 2004 112 882
- US-A1- 2007 051 469

## Beschreibung

Die Erfindung betrifft ein Verfahren und eine Vorrichtung mit den Merkmalen der einleitenden Teile der unabhängigen, auf das Verfahren einerseits und die Anordnung andererseits gerichteten Ansprüche (EP 2 286 972 A).

Aus der AT 501 000 A1 ist ein Verfahren und eine Anordnung zum Teilen von Glas, insbesondere Flachglas, mit Hilfe von Laserstrahlung bekannt. Bei diesem bekannten Verfahren wird ein gebündelter Laserstrahl auf das zu teilende Flachglas gerichtet, und an einer unterhalb des Flachglases angeordneten Reflexionsfläche reflektiert. Die reflektierten Laserstrahlen werden mit Hilfe eines am Kopf des Lasers angeordneten und eine Durchtrittsöffnung für den gebündelten Laserstrahl aufweisenden Reflektors, in dem zwei muldenförmige, längliche Spiegelflächen vorgesehen sind, in Form von zwei Bündeln von Laserstrahlen wieder auf das Flachglas reflektiert. Durch den gebündelten Laserstrahl entsteht im Flachglas ein Mikroriss ohne Erwärmen des Flachglases. Durch die von den Reflektionsflächen am Reflektor reflektierten Laserstrahlbündel entstehen beidseits des Mikrorisses erwärmte Bereiche. Unter der Wirkung der daraus resultierenden thermischen Spannungen wird der Mikroriss über die gesamte Dicke des Flachglases geöffnet und das Flachglas ist geteilt.

Ein weiteres Verfahren zum Teilen von Flachglas unter Verwendung von Laserstrahlen ist aus der EA 004167 B1 bekannt. Bei diesem bekannten Verfahren wird ein Laserstrahl verwendet, insbesondere ein CO₂-Laser, wobei zunächst ein fokussierter Laserstrahl und dann ein entfokussierter Laserstrahl verwendet wird. Mit Hilfe des fokussierten Laserstrahls wird in der vorgesehenen Trennlinie eine die Erweichungstemperatur überschreitende Temperatur erzeugt. Durch Einwirken des entfokussierten Laserstrahls auf das auf einer Temperatur über der Erweichungstemperatur befindliche Glas werden zusätzlich Dehnspannungen gebildet, sodass sich die vorgesehene Trennlinie öffnet.

Durch eine Veröffentlichung des Laserzentrum Hannover EV (http//www.lzh.de) ist ein Verfahren zum Trennen von Glaswerkstoffen mittels Laser bekannt. Dieses bekannte Verfahren beruht auf der Mehrfachreflexion eines für Glasstoffe größtenteils tramsmissiven Nd:YAG-Lasers (MULTIPLE LASER BEAM ABSORPTION, MLBA). Dieses Verfahren setzt einen Nd: YAG-Laser ein, dessen Strahlung je nach Glasstärke mit bis zu 85 % transmittiert wird. Durch Mehrfachreflexion des Strahls durch das zu teilende Glas wird die Gesamtabsorption erhöht und eine thermische Spannung über die gesamte Glasdicke induziert. Dabei wird eine Anordnung eingesetzt, die einen Laserkopf, einen am Laserkopf angebrachten oberen Reflektor und einen unterhalb des Glases, also auf der dem Laserkopf gegenüberliegenden Seite des Glases vorgesehenen unteren Reflektor aufweist.

Mit diesem Verfahren sollen auch mehrere übereinander liegende Glasscheiben in einem Arbeitsschritt geteilt werden können, ebenso wie Verbundsicherheitsglas (VSG).

Die praktische Umsetzung der bekannten Verfahren ist bislang wegen ihrer geringen Leistungsfähigkeit und einem unsicheren Verlauf des Bruches im Glas gescheitert.

Aus der EP 2 286 972 A ist es bekannt an Kanten von Rändern von Flachglasscheiben Fasen zu erzeugen, indem ein Laserstrahl auf die Glasscheibe einwirkt, nachdem diese zuvor mit Hilfe eines Schneidrädchens geritzt worden ist.

Aus der WO 2012/006736 A2 ist ein Verfahren zum Teilen von Glasscheiben bekannt. Dabei können auch Fasen erzeugt werden. Die Laserstrahlen sollen so eingesetzt werden, dass Fasen mit der gewünschten Lage und Größe erzeugt werden und der Bereich, in dem Fasen erzeugt werden, zum Tempern durch Laserstrahlen thermisch behandelt wird.

Ein weiteres Verfahren und eine Vorrichtung zum Herstellen eines Trennspaltes in einer Glasscheibe mit Hilfe von Laserstrahlung ist aus der WO 2008/080182 A1 bekannt. Bei diesem Verfahren zum Teilen einer Glasscheibe mit Laserstrahlung wird die Glasscheibe von der Laserstrahlung beim einfachen oder mehrfachen Durchdringen von einer ersten Oberfläche der Glasscheibe zu einer gegenüberliegenden und von dieser distanzierten zweiten Oberfläche der Glasscheibe örtlich erwärmt und in der Glasscheibe durch die dadurch auftretenden Wärmespannungen der Trennspalt geöffnet. Die Laserstrahlung wird an der ersten Oberfläche in die Glasscheibe im Wesentlichen reflexionsfrei und brechungsfrei eingeleitet.

Im Einzelnen soll bei der WO 2008/080182 A so gearbeitet werden, dass die Laserstrahlung durch ein optisches Bauelement, nämlich ein Prisma, bis zu einer Strahlaustrittsfläche desselben hindurchgeführt wird und danach im Wesentlichen brechungsfrei und reflexionsfrei in eine unmittelbar mit der Strahlaustrittsfläche in Kontakt stehenden Flüssigkeit und von dieser unmittelbar mit der Flüssigkeit in Kontakt stehende erste Oberfläche der Glasscheibe in die Glasscheibe eingeleitet. Dabei soll die Flüssigkeit zumindest annähernd den selben Brechungsindex wie die Glasscheibe aufweisen. Vorgesehen ist dabei, dass die Laserstrahlung mit einem bezogen auf das Einfallslot in einem Eintrittspunkt des Strahlenbündels schrägen Einfallswinkel durch die erste Oberfläche der Glasfläche eingeleitet wird, wobei der Einfallswinkel der Laserstrahlung von der ersten Oberfläche so gewählt wird, dass von der zweiten Oberfläche der Glasscheibe eine Totalreflexion der Laserstrahlung erfolgt.

Aus A. Ostendorf et al. "Licht statt Schneidrädchen - Trennen von Glaswerkstoffen mittels Laserstrahlung", in Zukunft Glas - von der Tradition zum High-tech-Produkt, 5. Symposium; 17. - 18. Juni Zwiesel 2004, S. 31 - 40 ist beim Teilen von Glas das "Laserritzen" und das "Lasersprengen" bekannt. Diese Literaturstelle erwähnt auch das Nachbearbeiten lasergetrennter Glaswerkstoffe, bei dem an der Kante mittels CO₂-Laser ein Glasspan abgesprengt werden soll, um eine rissfreie Fase zu erzeugen. Allerdings soll das aus der genannten Literaturstelle ohne Einzelheiten bekannte Verfahren nur bei lasergetrennten Glasbauteilen einsetzbar sein, da anders getrennte Glasteile beim Erwärmen mittels Laserstrahlung sofort zerstört würden.

Der Erfindung liegt die Aufgabe zugrunde, ein Verfahren und eine Anordnung der eingangs genannten Gattung anzugeben, mit welcher beim Teilen von Glasscheiben (Schneiden von Glasscheiben) mit Hilfe von Laserstrahlen auch wenigstens eine Fase an den so gebildeten Rändern der Glasscheibe erzeugt wird, sodass das nachträgliche Schleifen, also das nachträgliche Bearbeiten mit einem Schleifwerkzeug, entfällt.

Gelöst wird diese Aufgabe, was das Verfahren betrifft, mit den Merkmalen des auf das Verfahren gerichteten unabhängigen Anspruches und, soweit die Anordnung betroffen ist, mit den Merkmalen des auf die Anordnung gerichteten unabhängigen Anspruches.

Bevorzugte und vorteilhafte Weiterbildungen des erfindungsgemäßen Verfahrens und der erfindungsgemäßen Anordnung sind Gegenstand der Unteransprüche.

Mit dem erfindungsgemäßen Verfahren und der erfindungsgemäßen Anordnung wird vermieden, dass es bei lasergeschnittenen Glasscheiben wegen der außerordentlich scharfen Kanten am Rand zu Absplitterungen kommt, wenn die Glasscheiben aufgestellt werden. Dies auch, wenn sie flächig auf dem Seitenrand stehen, ungeachtet des Umstandes, dass dann im Kantenbereich Zugspannungen entstehen. Solche Absplitterungen sind nachteilig, weil sie Ausgangspunkte für Mikrorisse in der Glasscheibe sind, die später den Bruch der Glasscheibe zur Folge haben können.

Von wesentlicher Bedeutung für die Erfindung ist es, dass für das Herstellen der wenigstens einen Fase ein zweiter, weiterer Laserkopf vorgesehen ist, der nach dem ersten, den Schnitt - mit dem Glasscheiben geteilt werden - erzeugenden Laserkopf tätig wird und die Fase oder die Fasen erzeugt.

Von Vorteil bei dem erfindungsgemäßen Verfahren ist es, dass beim Erzeugen von Fasen die Glasscheiben nicht gesondert geritzt werden brauchen.

Mit der erfindungsgemäßen Maßnahme bzw. der erfindungsgemäßen Anordnung werden die scharfen Kanten beseitigt, indem eben mit dem wenigstens einen weiteren Laserkopf wenigstens eine Fase erzeugt wird.

Bei der Erfindung wird die Fase in vorteilhafter Weise durch Einwirken eines Laserstrahles erzeugt.

Beim Ausführen des erfindungsgemäßen Verfahrens werden bevorzugt Maßnahmen.getroffen, um Reflexionen des Laserstrahls bei seinem Eintritt in das Glas des Glaswerkstoffes zu vermeiden oder wenigstens zu minimieren.

Hierzu ist bei dem erfindungsgemäßen Verfahren in einer Ausführungsform ein Medium vorgesehen, das im Bereich des Laserstrahles die Oberfläche des Glaswerkstoffes (Flachglas) bedeckend angeordnet ist und einen Brechungsindex hat, der jenem des Glases im Glaswerkstoff wenigstens ähnlich, wenn nicht (im Wesentlichen) gleich ist. Dieses gleichsam als "optischer Kitt" wirkende Medium kann ein Fluid, insbesondere eine Flüssigkeit, sein, das die Kante, an der eine Fase zu erzeugen ist, umgibt. Beispielsweise sind Wasser oder Glyzerin im Rahmen der Erfindung als Medium geeignet.

Eine alternative Möglichkeit, die vorgenannten Reflexionen zu vermeiden oder zu minimieren besteht darin, den Laserstrahl unter dem Brewster-Winkel auf das Glas des Glaswerkstoffes zu richten. Diese Maßnahme kann auch gemeinsam mit der Verwendung des als "opitscher Kitt" wirkenden Medium angewendet werden.

Wenn das Medium, z.B. die Flüssigkeit, strömt und dabei die Kante des Glaswerkstoffes (Flachglas) umspült, wird gleichzeitig eine Kühlung bewirkt, welche die für das Absprengen des Glasteiles beim Erzeugen der Fase vorteilhafte Spannung im Glas ergibt.

Beim Ausführen des erfindungsgemäßen Verfahrens ist bevorzugt, wenn die Laserquelle wenigstens im Bereich des Austrittes des Laserstrahles aus der Laserquelle innerhalb des Mediums liegt. Auch Reflektoren für den Laserstrahl sind bevorzugt wenigstens im Bereich des Zutritts des Laserstrahles in den Reflektor und des Wiederaustrittes des reflektierten Laserstrahls aus dem Reflektor innerhalb des Mediums angeordnet.

Die im Rahmen der Erfindung eingesetzten Reflektoren sind beispielsweise (einfache) Spiegel, wie Metallspiegel. Im Rahmen der Erfindung in Betracht gezogene Reflektoren können auch komplexe Bauteile sein, die in sich die erforderlichen optischen Funktionen, gegebenenfalls eine Kühlung und weitre Sekundärfunktionen integrieren. In jedem Fall werden die Reflektoren ein Eintritts- und ein Austritts-Interface haben, wobei wenigstens das Eintritts- und das Austritts-Interface innerhalb des Mediums, das als "optischer Kitt" wirkt, angeordnet sind und nicht zwingend der gesamte Reflektor.

Im Rahmen der Erfindung ist in Betracht gezogen, polarisierte Laserstrahlung einzusetzen. In diesem Fall hat es sich als vorteilhaft herausgestellt, den Laserstrahl unter dem sogenannten "Brewster-Winkel" auf den Glaswerkstoff zu richten, weil dann -eine Polarisierung parallel zur Ebene der Fläche des Glaswerkstoffes bzw. des auf diesem angeordneten Medium vorausgesetzt - jede Reflexion entfällt und der Laserstrahl vollständig durch die Fläche in den Glaswerkstoff eintritt, und die Verwendung eines Mediums obsolet wird oder die Reflexionen, die auftreten, wenn der Brechungsindex des Mediums und der Brechungsindex des Glaswerkstoffes nicht vollständig übereinstimmen, unterdrückt werden können.

Wenn der Laserstrahl unter dem vorgenannten Brewster-Winkel auf den Glaswerkstoff gerichtet ist, ist das Medium, das die Oberfläche des Glaswerkstoffes bedeckt und wegen seines Brechungsindex (dieser ist jenem des Glaswerkstoffes gleich oder wenigstens ähnlich) als "optischer Kitt" wirkt, nicht zwingend erforderlich, weil im Falle des Einfalls des Laserstrahles unter dem Brewster-Winkel keine Reflexion auftritt.

Im Rahmen der Erfindung ist auch in Betracht gezogen, zum Erzeugen der Fase (zwei) Laserstrahlen mit unterschiedlichen Eigenschaften einzusetzen. Beispielsweise kann zum Bilden des Risses ein Laserstrahl mit einer Wellenlänge in der Größenordnung von 0,5 µm eingesetzt werden. Zum Öffnen des Risses, also zum Abtrennen des Glasteils unter Bilden der gewünschten Fase kann ein Laserstrahl mit einer Wellenlänge in der Größenordnung von 10,6 µm (z.B. CO₂-Laser) eingesetzt werden.

Bei der Erfindung ist auch in Betracht gezogen, den Laserstrahl beim Reflektieren zu bündeln, wobei der Brennpunkt bevorzugt innerhalb des Glaswerkstoffes liegt. Das Bündeln kann mit Hilfe von konkav gekrümmten Reflektoren erreicht werden. Diese Ausführungsform des erfindungsgemäßen Verfahrens erlaubt es weiters, Fase mit konvex gekrümmter Fläche zu erzeugen.

Beim erfindungsgemäßen Verfahren kann am Rand von Flachglas als Glaswerkstoff eine Fase an einer Kante des Randes oder es können, insbesondere gleichzeitig, Fasen an beiden Kanten des Randes von Flachglas erzeugt werden.

Wenngleich nicht zwingend, sind das erfindungsgemäße Verfahren und die erfindungsgemäße Anordnung insbesondere auch für das Erzeugen von Fasen an Glaswerkstoffen (Flachglas) geeignet, die durch Laserteilen entstanden sind.

Bei dieser bevorzugten Anwendung des erfindungsgemäßen Verfahrens, ist vorgesehen, dass für das Erzeugen der wenigstens einen Fase ein zweiter, weiterer Laserkopf vorgesehen ist, der nach dem ersten, den Schnitt erzeugenden Laserkopf tätig wird und die Fase oder die Fasen erzeugt.

Mit dem erfindungsgemäßen Verfahren und der erfindungsgemäßen Anordnung wird vermieden, dass es bei lasergeschnittenen Glasscheiben wegen der außerordentlich scharfen Kanten am Rand zu Absplitterungen kommt, wenn die Glasscheiben aufgestellt werden. Dies auch, wenn sie flächig auf dem Seitenrand stehen, ungeachtet des Umstandes, dass dann im Kantenbereich Zugspannungen entstehen. Solche Absplitterungen sind nachteilig, weil sie Ausgangspunkte für Mikrorisse in der Glasscheibe sind, die später den Bruch der Glasscheibe zur Folge haben können.

Mit der erfindungsgemäßen Maßnahme bzw. der erfindungsgemäßen Anordnung werden die scharfen Kanten beseitigt, indem an Rändern von, insbesondere lasergeschnittenen, Glasteilen mit dem wenigstens einen weiteren Laserkopf wenigstens eine Fase erzeugt wird.

Das bei der Erfindung angewendete Verfahren und eine Anordnung mit der das Verfahren gemäß der Erfindung ausgeführt werden kann, werden nachstehend mit Bezugnahme auf die Zeichnungen näher erläutert. Es zeigt:
- Fig. 1: das Prinzip des Glasschneidens mit Laser,
- Fig. 2: eine Abwandlung des Prinzipes von Fig. 1,
- Fig. 3a und b: Ausführungsformen des Verlaufes der Laserstrahlung,
- Fig. 4: schematisch beim Schneiden von Glas mit Laserstrahlung entstehende heiße Bereiche,
- Fig. 5: eine weitere Ausführungsform des Schneidens von Glas mit Laserstrahlung,
- Fig. 6: eine andere Ausführungsform des Schneidens von Glas mit Laserstrahlung,
- Fig. 7: schematisch das erfindungsgemäße Erzeugen von zwei Fasen,
- Fig. 8: schematisch das erfindungsgemäße Erzeugen nur einer Fase,
- Fig. 9: eine Ausführungsform einer Anordnung zum Ausführen des erfindungsgemäßen Verfahrens,
- Fig. 10: eine abgeänderte Ausführungsform und
- Fig. 11: eine Ausführungsform, bei der beide Kanten eines Randes mit Fasen versehen werden.

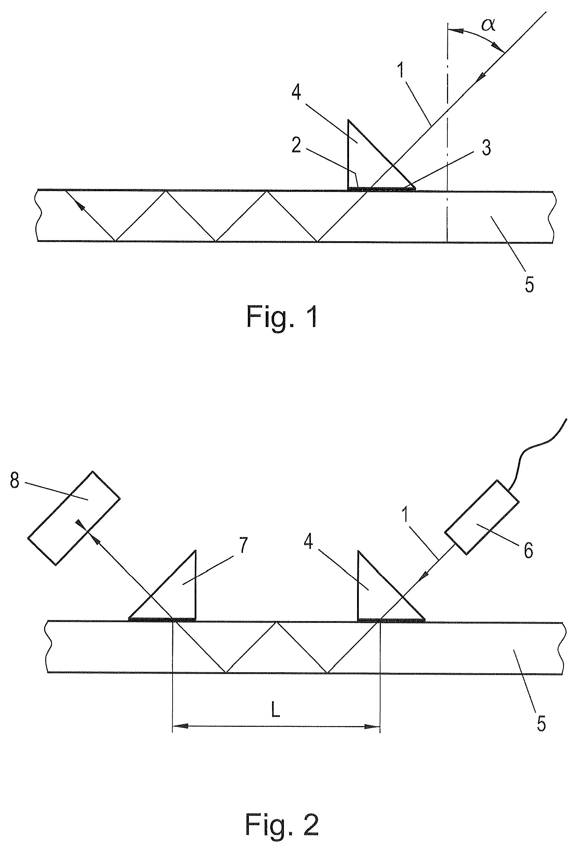

Bei dem in Fig. 1 gezeigten Glasschneiden mit Hilfe von Laserstrahlung unter Anwendung des Effektes der Totalreflexion des Laserstrahls an der zweiten Glasfläche trifft ein Laserstrahl 1 auf ein Prisma 4 auf, wobei der Winkel in der Nähe von 90° ist. Der Winkel α zwischen der normalen Oberfläche des zu teilenden Glases 5 und der optischen Achse des Laserstrahls 1 ist größer oder gleich dem Winkel der inneren Totalreflexion im Glas 5. Um den Laserstrahl 1 aus dem Prisma 4 in das zu teilende Glas 5 einzuleiten, ist es wichtig, dass sie in optischem Kontakt stehen. Dies wird bei Fig. 1 dadurch erreicht, dass im Bereich 2 zwischen dem Prisma 4 und dem zu teilenden Glas 5 ein optischer Kontakt herbeigeführt wird, der beispielsweise durch spezielle Flüssigkeiten (Wasser oder Glyzerin) oder (flexible) transparente (folienartige) Werkstoffe 3 herbeigeführt wird.

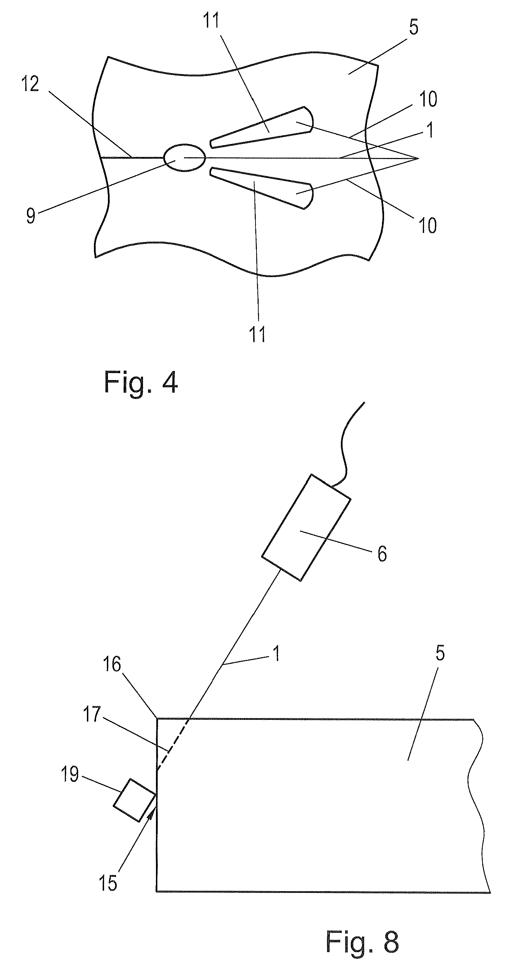

Es kann im Rahmen der Erfindung vorgesehen sein, dass die Seiten des Prisma 4 komplexe geometrische Formen haben, damit sie heiße Stellen mit bestimmter Form (vgl. Fig. 4) erzeugen.

Der optische Kontakt zwischen Prisma 4 und Glas 5 kann auch durch genaues Ausrichten der Kontaktflächen zwischen Glas 5 und Prisma 4 erreicht werden, wobei der höchst zulässige Spalt im Bereich 2 kleiner sein sollte als die Wellenlänge der Strahlung.

Die Vorteile des in Fig. 1 schematisch gezeigten Verfahrens sind, dass keine Schneidtische mit reflektierenden Oberflächen mehr benötigt werden und dass durch die Totalreflexion eine hohe Ausbeute mit geringen Verlusten auftritt.

In Fig. 2 ist gezeigt, dass der Laserstrahl 1 aus einer Strahlenquelle 6 in das Prisma 4 eintritt und aus diesem in das zu teilenden Glas 5 eintritt. Der Strahl 1 setzt sich im Glas 5 unter mehrfacher Totalreflexion über die Strecke L fort und tritt durch ein zweites Prisma 7 aus dem Glas 5 und wird an einem Spiegel 8 (reflektierendes Fokussiersystem) reflektiert, so dass der reflektierte Laserstrahl einen Strahl mit der gewünschten und benötigten Form bildet.

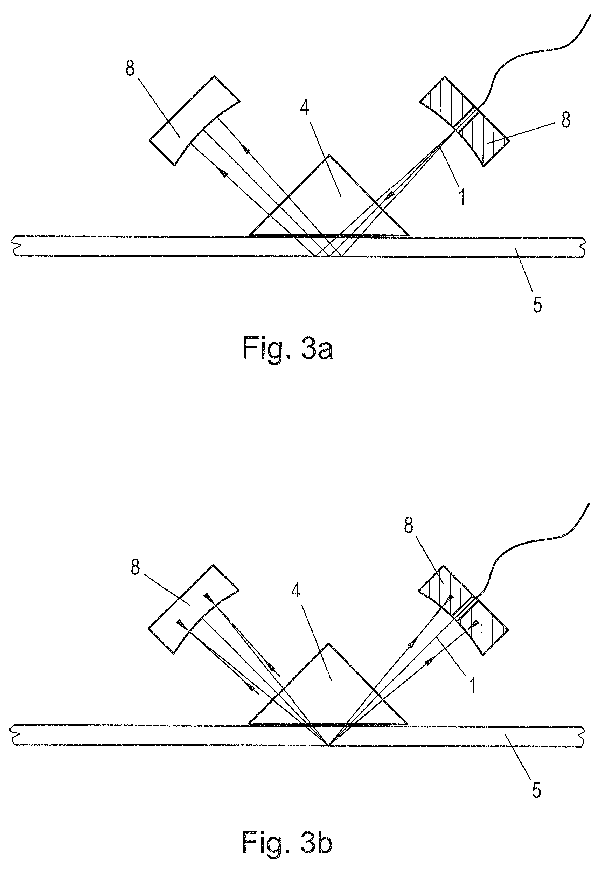

Die praktische Anwendung dieses Schemas ist für dünnes Glas in den Fig. 3a und 3b gezeigt.

Fig. 4 zeigt schematisch und in Draufsicht dass es vorteilhaft ist, am Glas 5 heiße Stellen nach dem in Fig. 4 gezeigten Muster zu bilden. Haupt-Laserstrahl 1 bildet die heiße Stelle 9 in Fig. 4, wogegen reflektierte Laserstrahlen 10 in Fig. 4 heiße Stellen 11 bilden, sodass sich das Glas 5 entlang einer Trennlinie 12 teilt.

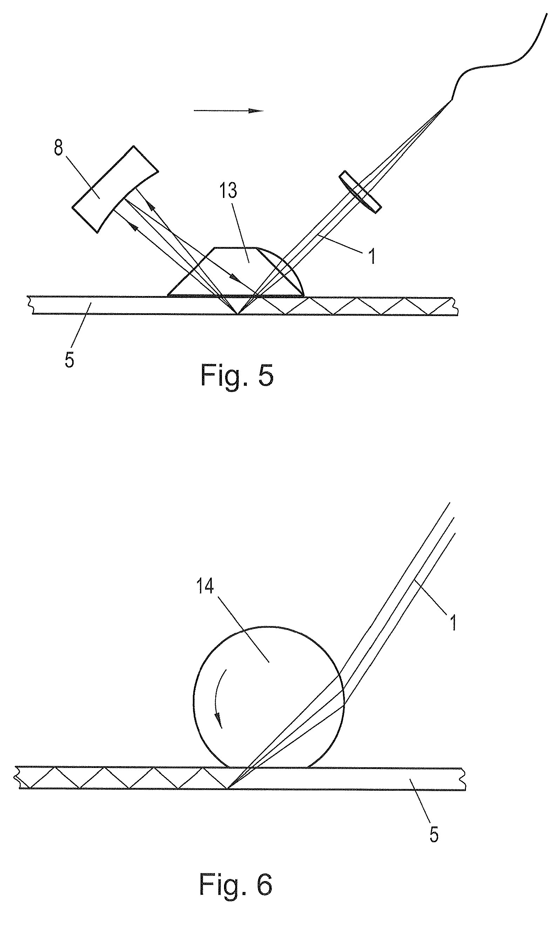

In einem speziellen Fall können die Funktionen der reflektierenden Bauteile 8, wie in Fig. 5 gezeigt, durch eine speziell geformte Oberfläche 4 des in Fig. 5 gezeigten Prisma 13 erreicht werden, das mit der geeigneten Form ausgebildet und mit einer reflektierenden Beschichtung versehen ist.

Es ist auch möglich, den Laserstrahl 1 so in das Glas 5 zu richten, um den Effekt der inneren Totalreflexion zu erreichen, indem flexible transparente Werkstoffe verwendet werden, die den optischen Kontakt im Bereich 2, wo sie mit dem Glas 5, das zu schneiden ist, in Berührung stehen, verstärken. In einem besonderen Fall (vgl. Fig. 6) kann dies erreicht werden, indem auf das Glas 5 eine Kugel 14 aus transparentem Werkstoff (flexibel) gedrückt wird (beispielsweise einer Kugel 14 aus transparentem Polymer) und der Laserstrahl 1 durch sie geleitet wird.

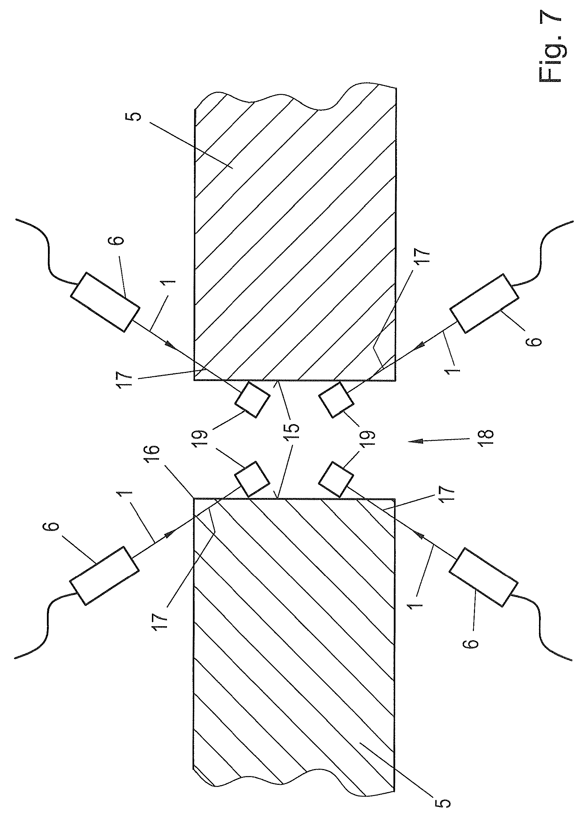

Wie in Fig. 7 gezeigt, werden bei dem erfindungsgemäßen Verfahren für das Erzeugen von Fasen 17 an den Rändern 15 des geteilten Glases 5, in dem im Bereich des zuvor hergestellten Schnittes ein Spalt 18 ausgebildet ist, weitere Laserquelle 6 verwendet.

Wenngleich in Fig. 7 und in Fig. 8 nicht dargestellt, ist auch bei diesen Ausführungsformen die Anwesenheit eines Mediums an der Glasoberfläche in Betracht gezogen. Dieses Medium, z.B. Wasser oder Glyzerin, hat einen Brechungsindex, der jenem des Glases der Flachglasscheibe wenigstens ähnlich, wenn nicht gleich ist. Dieses Medium kann, wenn es - wie bevorzugt - eine Flüssigkeit ist, den Rand der Glasscheibe an dem die Kanten unter Bilden von Fasen bearbeitet werden, umspülen.

In Einzelnen ist gemäß Fig. 7 vorgesehen, dass für jede der an den Rändern 15 herzustellenden Fase 17 eine Laserquelle 6 vorgesehen ist. Jeder Laserquelle 6 ist ein Reflektor 19 zugeordnet. Die Laserquellen 6 und die zugeordneten Reflektoren 19 werden von einem Antrieb (nicht gezeigt) entlang der Ränder 15 im Bereich des Spaltes 18 bewegt und erzeugen nach dem zuvor erläuterten Prinzip Fasen 17 an den Rändern 15 der durch das Teilen von Glas 5 entstandenen Glasteile (Glaszuschnitte).

Es versteht sich, dass nicht beide Ränder 15 des geteilten Glases 5 gleichzeitig unter Erzeugen von Fasen 17 bearbeitet werden müssen. Dies kann auch nacheinander erfolgen.

Ebensowenig ist es zwingend, wenngleich vorteilhaft, an einem Rand 15 vom Glas 5 zwei Fasen 17 herzustellen. Oft genügt nur eine Fase 17 (vgl. Fig. 8) oder aber es werden die Fasen 17 nacheinander hergestellt, was einen geringeren apparativen Aufwand bedeutet.

In Fig. 8 ist stark schematisiert dargestellt, wie am Rand 15 von einem durch Teilen von Glas 5 gebildeten Glaszuschnitt im Bereich einer Kante 16 des Randes 15 des Zuschnittes mit Hilfe eines Laserstrahls 1 eine Fase 17 erzeugt wird. Dabei kann der Strahlengang unter dem Einfluss des Reflektors 19 im Prinzip so verlaufen, wie dies in den Fig. 1 bis 7 gezeigt ist.

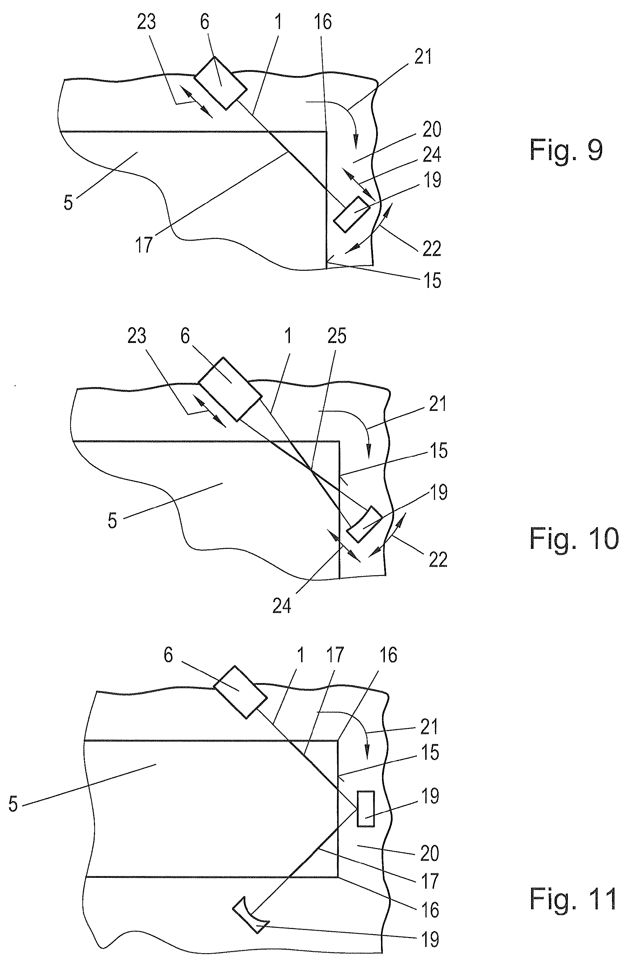

Beim Ausführen des erfindungsgemäßen Verfahrens kann, beispielsweise so wie dies in den Figuren 9, 10 oder 11 gezeigt ist, gearbeitet werden.

Bei der Ausführungsform von Fig. 9 ist das Glas 5, insbesondere im Bereich der Kante 16, an der eine Fase 17 zu erzeugen ist, mit einem Medium 20 bedeckt, das einen Brechungsindex hat, der dem von Glas (1,4 - 1,6) identisch ist oder wenigstens nahe kommt. Dadurch werden Reflexionen des aus der Laserquelle 6 austretenden Strahls 1 beim Übertritt in das Glas 5 und beim Austritt aus demselben verhindert oder wenigstens minimiert. Dieses Medium 20, das quasi als "optischer Kitt" wirkt, kann beispielsweise eine Flüssigkeit, insbesondere Wasser oder Glyzerin, sein.

Das Medium 20, das im Bereich der Kante 16 vorliegt und diese bedeckt, kann auch strömen (Pfeil 21), also die Kante 16, umspülen, was den Vorteil hat, dass gleichzeitig der außerhalb des Laserstrahls 1 liegende Bereich, also der Bereich der Glaskante 16, der beim Bilden der Fase 17 abzusprengen ist, gekühlt wird, sodass Spannungen, die den Bruch bewirken, also das Herstellen der Fase 17 unterstützen, entstehen.

Bei der in Fig. 9 gezeigten Variante des erfindungsgemäßen Verfahrens zum Herstellen einer Fase 17 ist auch die Laserquelle 6 wenigstens im Bereich der Austrittstelle des Laserstrahls 1 aus der Laserquelle 6 im Medium 20 angeordnet. Gleiches gilt für den Reflektor 19, der ebenfalls wenigstens in seinem für die Reflexion wirksamen Bereich im Medium 20 angeordnet ist. Der Reflektor 19 kann schwenkbar (Pfeil 22) sein.

Bei der in Fig. 9 gezeigten Anordnung sind die Laserquelle 6 und auch der Reflektor 19 verstellbar, wobei das Verstellen, insbesondere in Richtung des Laserstrahles 1, möglich ist.

Fig. 10 ist eine Variante, gezeigt, bei der ein Reflektor 19 mit einer konkav gekrümmten Reflexionsfläche ausgebildet ist, sodass der Laserstrahl 1 gebündelt wird, was eine Verbesserung der Wirksamkeit ergibt. Zusätzlich erlaubt es die Variante von Fig. 10, Fasen 17 mit nicht ebener sondern mit konvex gewölbter (runder oder polygonaler) Außenfläche zu erzeugen. Durch Verstellen der Laserquelle 6 (Pfeil 23) und/oder des Reflektors 19 (Pfeil 24) kann der Fokus 25 des Laserstrahls 1 so eingestellt werden, dass das Herstellen der Fase 17 optimiert ist.

Beim erfindungsgemäßen Verfahren, wie es in Fig. 11 gezeigt ist, kann erreicht werden, dass beide Fasen 17 am Rand 15 der Glasscheibe 5 in einem Arbeitsgang erzeugt werden. Vorteilhaft ist, wenn auch der zweite Reflektor 19 wenigstens mit seinem für die Reflexion wirksamen Bereich innerhalb des Mediums 20, das einen möglichst reflexionsfreien Übergang des Laserstrahls 1 in das Glas 5 und aus dem Glas 5 ermöglicht, angeordnet ist.

Im Rahmen der Erfindung ist in Betracht gezogen, dass beim Erzeugen der Fase mit Laserstrahlen gearbeitet wird, die unterschiedliche Wellenlängen aufweisen. Dabei kann für den einen Laserstrahl die (erste) Wellenlänge so gewählt werden, dass sie für die Rissbildung besonders vorteilhaft und wirksam ist und für den zweiten Laserstrahl einer (zweiten) Wellenlänge so gewählt sein, dass sie für das Öffnen des Risses besonders günstig und wirksam ist. Beispielsweise hat ein Laserstrahl, der für die Rissbildung verantwortlich ist, eine (erste) Wellenlänge (im grünen Bereich) von 0,5 µm, wogegen für den zweiten Laserstrahl (z.B. CO₂-Laser für das Öffnen des Risses) eine (zweite) Wellenlänge ein mit einer Wellenlänge von 10,6 µm bevorzugt ist.

Zusammenfassend kann ein Ausführungsbeispiel der Erfindung wie folgt beschrieben werden.

Nach dem Teilen von Glas, insbesondere mit Hilfe von Laserstrahlung in Zuschnitte 5 aus Glas, wird auf wenigstens eine Kante 16 eines Randes 15 des gebildeten Zuschnittes 5 ein Laserstrahl 1 gerichtet, um von der Kante 16 unter Ausbilden einer am Rand 15 liegenden Fase 17 Glas abzutrennen. Für das Ausbilden der Fase 17 wird wenigstens eine Laserquelle 6 und ein dieser zugeordneter Reflektor 19 entlang des Randes 15 so bewegt, dass der mit der Ebene des Zuschnittes 5 einen spitzen Winkel einschließende Laserstrahl 1 für das Ausbilden der Fase 17 wirksam ist. Der Rand 15 wird von einer Flüssigkeit 20 umspült, deren Brechungsindex jenem des Glases wenigstens angenähert ist.

## Patentansprüche

1. Verfahren zum Erzeugen von Fasen (17) an Kanten (16) von Rändern von Erzeugnissen (5) aus Glaswerkstoff, insbesondere Flachglasscheiben, wobei die Fasen (17) durch Einwirken eines Laserstrahls (1) erzeugt werden, **dadurch gekennzeichnet, dass** im Bereich des Eintrittes des Laserstrahls (1) in das Erzeugnis (5) aus Glaswerkstoff ein Medium (20) vorgesehen ist, das einen Brechungsindex hat, der jenem des Glaswerkstoffs des Erzeugnisses (5) wenigstens angenähert ist, dass das Medium (20) den Bereich der Kante (16), an dem eine Fase (17) zu erzeugen ist, bedeckt, sodass das Medium (20) auch im Bereich des Austrittes des Laserstrahls (1) aus dem Erzeugnis (5) aus Glaswerkstoff vorgesehen wird, und dass die Laserquelle (6) wenigstens in dem Bereich, in dem der Laserstrahl (1) aus der Laserquelle (6) austritt, und ein den Laserstrahl (1) reflektierender Reflektor (19) wenigstens mit seinem reflektierenden Bereich innerhalb des Mediums (20) angeordnet wird.

2. Verfahren nach Anspruch 1, **dadurch gekennzeichnet, dass** als Medium ein Fluid, insbesondere eine Flüssigkeit, verwendet wird.

3. Verfahren nach Anspruch 2, **dadurch gekennzeichnet, dass** als Flüssigkeit Wasser oder Glyzerin verwendet wird.

4. Verfahren nach einem der Ansprüche 1 bis 3, **dadurch gekennzeichnet, dass** die Relativlage der Laserquelle in Bezug auf dem Rand des Glases, an dem wenigstens eine Fase zu erzeugen ist, verstellbar ist.

5. Verfahren nach einem der Ansprüche 1 bis 4, **dadurch gekennzeichnet, dass** die Relativlage des Reflektors in Bezug auf den Rand des Glases, an dem wenigstens eine Fase zu erzeugen ist, verstellbar ist.

6. Verfahren nach einem der Ansprüche 1 bis 5, **dadurch gekennzeichnet, dass** ein erster Reflektor den Laserstrahl nach Austritt aus der ersten Kante in Richtung auf eine zweite Kante umlenkt, und dass der aus der zweiten Kante austretende Laserstrahl von einem zweiten Reflektor zum ersten Reflektor hin reflektiert wird.

7. Verfahren nach einem der Ansprüche 1 bis 6, **dadurch gekennzeichnet, dass** als Reflektoren, Reflektoren mit ebener Reflexionsfläche oder solche mit konkav gekrümmter Reflexionsfläche verwendet werden.

8. Verfahren nach einem der Ansprüche 1 bis 7, **dadurch gekennzeichnet, dass** zum Erzeugen der Fase Laserstrahlen mit unterschiedlichen Wellenlängen verwendet werden.

9. Verfahren nach Anspruch 8, **dadurch gekennzeichnet, dass** zum Bilden des Risses eine Wellenlänge im grünen Bereich, beispielsweise von 0,5 µm, und zum Öffnen des Risses eine Wellenlänge von 10,6 µm (z.B. CO₂-Laser) verwendet wird.

10. Verfahren nach einem der Ansprüche 1 bis 9, **dadurch gekennzeichnet, dass** das Medium die Kante, an der eine Fase zu erzeugen ist, umspült.

11. Verfahren nach einem der Ansprüche 1 bis 10, **dadurch gekennzeichnet, dass** bei Verwendung eines konkav gekrümmten Reflektors die Laserquelle einerseits und der Reflektor andererseits so positioniert werden, dass der Fokus de Laserstrahls im Glas liegt.

12. Verfahren nach einem der Ansprüche 2 bis 11, **dadurch gekennzeichnet, dass** im Falle der Verwendung einer Flüssigkeit als Medium dieses blasenfrei angewendet wird.

13. Verfahren nach einem der Ansprüche 1 bis 12, wobei zum Teilen von Glas mit Hilfe von Laserstrahlung in Zuschnitte aus Glas, bei dem ein gebündelter Laserstrahl auf das zu teilende Glas gerichtet und das Glas unter Bilden von wenigstens zwei Zuschnitten mit im Bereich des Schnittes liegenden Rändern geteilt wird, **dadurch gekennzeichnet, dass** nach dem Teilen des Glases auf wenigstens eine Kante eines Randes des gebildeten Zuschnittes ein Laserstrahl gerichtet wird, um unter Anwenden des Verfahrens nach einem der Ansprüche 1 bis 12 vom Rand Glas unter Ausbilden einer am Rand liegenden Fase abzutrennen.

14. Verfahren nach Anspruch 13, **dadurch gekennzeichnet, dass** die wenigstens eine Fase durch Einwirken wenigstens eines vom Laserstrahl, mit dem das Glas in Zuschnitte geteilt wird, unabhängigen Laserstrahls erzeugt wird.

15. Verfahren nach Anspruch 13 oder 14, **dadurch gekennzeichnet, dass** an einem Rand des Zuschnittes im Bereich zweier Kanten des Randes Fasen erzeugt werden.

16. Anordnung zum Ausführen des Verfahrens nach einem der Ansprüche 13 bis 15 mit einer Laserquelle (6) für das Teilen des Glases (5) in wenigstens zwei Zuschnitte, **dadurch gekennzeichnet, dass** eine Vorrichtung vorgesehen ist, die das den Bereich der Kante (16) des Erzeugnisses (5), an der eine Fase (17) zu erzeugen ist, bedeckende Medium (20) bereitstellt, dass wenigstens eine weitere Laseranordnung (6) vorgesehen ist, deren Wirkebene zur Wirkebene der ersten Laseranordnung (6) unter einem spitzen Winkel steht und deren Laserstrahl (1) auf einen Bereich innerhalb einer Kante (16) am Rand (15) des Zuschnittes (5) gerichtet ist und dass den Laserquellen (6) für das Erzeugen der Fasen (17) Reflektoren (19) zugeordnet sind, die durch einen Antrieb synchron zu den Laserquellen (6) entlang des Randes (15) des Zuschnittes (5) verstellbar sind.

17. Anordnung nach Anspruch 16, **dadurch gekennzeichnet, dass** für das Teilen des Glases (5) eine Laserquelle (6) und ein Prisma aus optisch durchlässigen Werkstoffen in Kontakt mit der ersten Oberfläche des zu teilenden Glases, und ein Reflexionssystem vorgesehen sind, um den nach mehrfacher innerer Totalreflexion aus dem Glas an einer Austrittstelle durch ein weiteres Prisma austretenden Laserstrahl zu reflektieren und wieder in das Glas einzuleiten.

## Claims

1. Method for producing bevels (17) on edges (16) of sides of products (5) made of glass material, in particular flat glass panels, whereby the bevels (17) are produced by the action of a laser beam (1), **characterized in that** in the area of the entrance of the laser beam (1) into the product (5) made of glass material, a medium (20) is provided, which has a refraction index that is at least close to that of the glass material of the product (5), **in that** the medium (20) covers the area of the edge (16), on which a bevel (17) is to be produced, so that the medium (20) is also provided in the area of the exit of the laser beam (1) from the product (5) that consists of glass material, and **in that** the laser source (6) is arranged at least in the area in which the laser beam (1) exits from the laser source (6) and a reflector (19) that reflects the laser beam (1) is arranged at least with its reflecting area within the medium (20).

2. Method according to Claim 1, **characterized in that** as a medium, a fluid, in particular a liquid, is used.

3. Method according to Claim 2, **characterized in that** as a liquid, water or glycerin is used.

4. Method according to one of Claims 1 to 3, **characterized in that** the relative position of the laser source relative to the side of the glass, on which at least one bevel is to be produced can be adjusted.

5. Method according to one of Claims 1 to 4, **characterized in that** the relative position of the reflector relative to the side of the glass, on which at least one bevel is to be produced can be adjusted.

6. Method according to one of Claims 1 to 5, **characterized in that** a first reflector redirects the laser beam after exiting from the first edge in the direction toward a second edge and **in that** the laser beam that exits from the second edge is reflected from a second reflector to the first reflector.

7. Method according to one of Claims 1 to 6, **characterized in that** as reflectors, reflectors with flat reflective surface or those with concave reflective surface are used.

8. Method according to one of Claims 1 to 7, **characterized in that** for producing the bevel, laser beams with different wavelengths are used.

9. Method according to Claim 8, **characterized in that** for forming the crack, a wavelength in the green area, for example of 0.5 µm, is used, and for opening up the crack, a wavelength of 10.6 µm (e.g., CO2 laser) is used.

10. Method according to one of Claims 1 to 9, **characterized in that** the medium flushes the edge on which a bevel is to be produced.

11. Method according to one of Claims 1 to 10, **characterized in that** when using a concave reflector, the laser source, on the one hand, and the reflector, on the other hand, are positioned so that the focus of the laser beam lies in the glass.

12. Method according to one of Claims 2 to 11, **characterized in that** in the case of use of a liquid as a medium, the latter is applied in a bubble-free manner.

13. Method according to one of Claims 1 to 12, for dividing glass using laser radiation into blanks made of glass, in which a bundled laser beam is directed onto the glass to be divided, and the glass, with the formation of at least two blanks, is divided with sides lying in the area of the cut, **characterized in that** after the glass is divided, a laser beam is directed onto at least one edge of a side of the blank that is formed in order to separate glass from the side while forming a bevel that lies on the side while applying the method of one of Claims 1 to 12.

14. Method according to Claim 13, **characterized in that** the at least one bevel is produced by the action of at least one laser beam that is independent from the laser beam by which the glass is divided into blanks.

15. Method according to Claim 13 or 14, **characterized in that** on one side of the blank, bevels are produced in the area of two edges of the side.

16. Arrangement for implementing the method according to one of Claims 13 to 15 with a laser source (6) for dividing the glass (5) into at least two blanks, **characterized in that** a device is provided, that provides the medium (20), that does cover the area of the side (16) of the product (5), on which a bevel (17) is to be produced, that at least one additional laser arrangement (6) is provided, whose active plane is at an acute angle to the active plane of the first laser arrangement (6) and whose laser beam (1) is directed onto an area within one edge (16) on the side (15) of the blank (5) and **in that** reflectors (19) are assigned to the laser sources (6) for producing bevels (17), which reflectors can be adjusted by a drive synchronously with the laser sources (6) along the side (15) of the blank (5).

17. Arrangement according to Claim 16, **characterized in that** for the dividing of glass (5), a laser source (6) and a prism that consists of optically transparent materials in contact with the first surface of the glass that is to be divided, and a reflection system are provided in order to reflect and again to introduce into the glass the laser beam that exits after repeated inside total reflection from the glass at an exit point through another prism.

## Revendications

1. Procédé pour la production de chanfreins (17) au niveau d'arêtes (16) de bords de produits (5) en un matériau de verre, en particulier des plaques de verre plates, dans lequel les chanfreins (17) sont produits sous l'effet d'un faisceau laser (1), **caractérisé en ce que**, dans la zone d'entrée du faisceau laser (1) dans le produit (5) en matériau de verre, un milieu (20) est prévu, lequel présente un indice de réfraction qui est au moins proche de celui du matériau de verre du produit (5), **en ce que** le milieu (20) recouvre la zone de l'arête (16) où un chanfrein (17) doit être produit de telle sorte que le milieu (20) est également prévu dans la zone de la sortie du faisceau laser (1) hors du produit (5) en matériau de verre, et **en ce que** la source laser (6) est disposée au moins dans la zone dans laquelle le faisceau laser (1) sort de la source laser (6), et un réflecteur (19) réfléchissant le faisceau laser (1) étant disposé au moins avec sa zone réfléchissante à l'intérieur du milieu (20).

2. Procédé selon la revendication 1, **caractérisé en ce que** l'on utilise un fluide, en particulier un liquide, en tant que milieu.

3. Procédé selon la revendication 2, **caractérisé en ce que** l'on utilise de l'eau ou de la glycérine en tant que liquide.

4. Procédé selon l'une des revendications 1 à 3, **caractérisé en ce que** la position relative de la source laser par rapport au bord du verre au niveau duquel au moins un chanfrein doit être produit, est déplaçable.

5. Procédé selon l'une des revendications 1 à 4, **caractérisé en ce que** la position relative du réflecteur par rapport au bord du verre au niveau duquel un chanfrein doit être produit, est déplaçable.

6. Procédé selon l'une des revendications 1 à 5, **caractérisé en ce qu'**un premier réflecteur dévie le faisceau laser après la sortie de la première arête en direction d'une deuxième arête, et **en ce que** le faisceau laser sortant de la deuxième arête est réfléchi par un deuxième réflecteur vers le premier réflecteur.

7. Procédé selon l'une des revendications 1 à 6, **caractérisé en ce que**, en guise de réflecteurs, on utilise des réflecteurs avec une surface de réflexion plane ou bien d'un genre avec une surface de réflexion courbée de manière concave.

8. Procédé selon l'une des revendications 1 à 7, **caractérisé en ce que**, pour produire le chanfrein, on utilise des faisceaux laser à longueurs d'onde différentes.

9. Procédé selon la revendication 8, **caractérisé en ce que**, pour la formation de la déchirure, on utilise une longueur d'onde dans la plage verte, par exemple de 0,5 µm, et pour ouvrir la fissure, une longueur d'onde de 10,6 µm (par exemple laser à CO₂).

10. Procédé selon l'une des revendications 1 à 9, **caractérisé en ce que** le milieu rince l'arête au niveau de laquelle un chanfrein doit être formé.

11. Procédé selon l'une des revendications 1 à 10, **caractérisé en ce que**, lors de l'utilisation d'un réflecteur courbé de manière concave, la source laser d'une part, et le réflecteur d'autre part sont positionnés de telle sorte que le foyer du faisceau laser se situe dans le verre.

12. Procédé selon l'une des revendications 2 à 11, **caractérisé en ce que**, dans le cas de l'utilisation d'un liquide en tant que milieu, celui-ci est utilisé sans bulles.

13. Procédé selon l'une des revendications 1 à 12, dans lequel, pour découper le verre en pièces découpées en verre à l'aide d'un rayonnement laser, un rayon laser en faisceau est dirigé sur le verre à découper et le verre étant découpé en formant au moins deux pièces découpées avec des bords se situant dans la zone de la coupure,
**caractérisé en ce que**, après le découpage du verre, on dirige un faisceau laser sur au moins une arête d'un bord de la pièce découpée formée afin de, en utilisant le procédé selon l'une des revendications 1 à 12, trancher du verre du bord en formant un chanfrein situé sur le bord.

14. Procédé selon la revendication 13, **caractérisé en ce que** l'au moins un chanfrein est produit sous l'effet d'au moins un faisceau laser indépendant du faisceau laser avec lequel le verre est découpé en pièces découpées.

15. Procédé selon la revendication 13 ou 14, **caractérisé en ce que** des chanfreins sont produits sur un bord de la pièce découpée dans la zone de deux arêtes du bord.

16. Agencement pour réaliser le procédé selon l'une des revendications 13 à 15 avec une source laser (6) pour diviser le verre (5) en au moins deux pièces découpées, **caractérisé en ce que** l'on prévoit un dispositif qui met à disposition le milieu (20) recouvrant la zone de l'arête (16) du produit (5) au niveau de laquelle un chanfrein (17) doit être produit, **en ce que** l'on prévoit au moins un autre agencement laser (6) dont le plan efficace est orienté selon un angle aigu par rapport au plan efficace du premier agencement laser (6) et dont le faisceau laser (1) est dirigé sur une zone à l'intérieur d'une arête (16) sur le bord (15) de la pièce découpée (5), et **en ce que** l'on associe des réflecteurs (19) aux sources laser (6) pour la production des chanfreins (17), lesquels peuvent être déplacés par un dispositif d'entraînement de manière synchrone aux sources laser (6) le long du bord (15) de la pièce découpée (5).

17. Agencement selon la revendication 16, **caractérisé en ce que**, pour la découpage du verre (5), on prévoit une source laser (6) et un prisme en matériaux à transparence optique en contact avec la première surface du verre à découper et un système de réflexion afin de réfléchir le faisceau laser sortant du verre au niveau d'un emplacement de sortie après une réflexion totale intérieure multiple grâce à un autre prisme, et le réintroduire dans le verre.
